# EUROPEAN PATENT SPECIFICATION

(11) **EP 1 046 546 B1**
(45) Date of publication and mention of the grant of the patent: **27.11.2002**
(21) Application number: 99108129.0
(22) Date of filing: 24.04.1999
(51) Int. Cl.: B60R 19/22, B60R 19/18

(54) **Bumper for vehicles having optimal mechanical properties to improve pedestrian protection**
Kraftfahrzeugstossfänger mit optimalen mechanischen Eigenschaften zum Verbessern des Fussgängerschutzes
Pare-chocs pour véhicules aux propriétés mécaniques optimales améliorant la protection des piétons

(43) Date of publication of application: 25.10.2000
(73) Proprietor: Ford Global Technologies, Inc., A subsidiary of Ford Motor Company, Dearborn, Michigan 48126 (US)
(72) Inventor: Howard, Mark, 52070 Aachen (DE)
(74) Representative: Drömer, Hans-Carsten, Dipl.-Ing.

(56) References cited:
- DE-C- 3 051 041
- FR-A- 2 445 783
- FR-A- 2 759 655
- US-A- 4 061 384
- US-A- 4 186 915
- US-A- 5 385 375
- PATENT ABSTRACTS OF JAPAN vol. 009, no. 307 (M-435), 4 December 1985 (1985-12-04) & JP 60 143161 A (MAZDA KK), 29 July 1985 (1985-07-29)
- PATENT ABSTRACTS OF JAPAN vol. 009, no. 264 (M-423), 22 October 1985 (1985-10-22) & JP 60 110548 A (NISSAN JIDOSHA KK), 17 June 1985 (1985-06-17)
- PATENT ABSTRACTS OF JAPAN vol. 015, no. 497 (M-1192), 16 December 1991 (1991-12-16) & JP 03 217355 A (NISSAN MOTOR CO LTD), 25 September 1991 (1991-09-25)
- PATENT ABSTRACTS OF JAPAN vol. 004, no. 084 (M-016), 17 June 1980 (1980-06-17) & JP 55 044063 A (INOUE MTP CO LTD), 28 March 1980 (1980-03-28)

## Description

The invention relates to a bumper for vehicles according to the preamble of claim 1.

The bumper, more specifically the front bumpers shape, is an important factor in improving the pedestrian protection. In the case of a collision, the position of the first impact determines the further motion of the body. Furthermore, with a lower point of impact the risk of knee ligament injuries may be reduced.

With that background the German patent 30 51 041 C2 describes an adjustable protector element which in a retracted position is aerodynamically optimized and when moved forward in the direction of driving and into a lowered position ensures first of all that the point of impact will be lowered and the pedestrian is tilted onto the front end of the vehicle. Only if the forces at the protecting element exceed 10 000 N, the protector will recede until its front face is approximately flush with that of the bumper.

In FR 2 759 655 (corresponding to the preamble of claim 1) a bumper consisting of a cover and a mounting element is described. The spacing between cover and mounting element is partly filled with absorber foam. The foam in the lower portion of the bumper having an increased stiffness, so that the lower portion of the bumper prior to a collision and in its mounted position has an increased stiffness relative to the upper portion and the relatively stiff lower portion is an integral part of the bumper.

It is essential to provide an improved a pedestrian protection device preferably to be used on the front of the car which lowers the point of impact without using further installations beneath the bumper.

This problem is solved by designing a bumper according to the preamble of claim 1. The bumper essentially consists of a cover, an absorber arranged beneath the cover and the mounting elements to connect a cover and absorber to the vehicles body. The optimal mechanical properties to improve the pedestrian protection are according to the invention achieved by various embodiments, the general principle of which is that the stiffness of the lower portion of the bumper in its mounted position is increased relative to the upper portion of the bumper. By making the lower portion of the bumper which is directed forwardly into the direction of driving stiffer , the impact force in case of collision with a pedestrian is concentrated on the lower portion of the bumper. Thus during the earliest phase of the impact, the force exerted onto the pedestrian is applied at a relatively low position so that the risk of knee ligaments is reduced. It is especially important that the relatively stiff lower portion is an integral part of the bumper, because of the interaction of forces exerted onto the pedestrian and the deformation of the lower portion of the bumper and the bumper as a whole during each phase of the impact. In other words, by making the device - which first impacts the pedestrian at a relatively low height - an integral part of the bumper, the mechanical properties of the bumper such as bending and the deformation of the bumper can be included in the overall bumper design which includes the optimization of the cover, the absorber and the supporting element with respect to the mechanical properties in the cross sectional and the longitudinal direction of the bumper. The variation in mechanical stiffness from the top to the bottom of the bumper can be achieved by various means. E.g. a lamellar structure for the cover and/or the absorber and/or the supporting structure or mounting element. With such a lamellar structure, the mechanical properties varies from lamella to lamella and perpendicular to the direction of stacking a shearing force would be required.

The cover and the absorber would be optimized with respect to their mechanical properties in order to make the lower portion of the bumper stiffer than the upper portion.

Preferably, the lower portion of the cover has the form of a lip extending forwardly into the direction of driving relative to the upper portion. This lip typically would have in a vertical cross section of the bumper in its mounted position at least a partly straight, approximately vertical front surface. The lip could have various cross sectional shapes, e.g. half circle, half oval, rectangular etc. The impact force is maintained on the lower part of the leg throughout the pedestrian impact and the leg is rotated by this lip away from the ground that means, the center of rotation of the leg is lowered.

The lip may be created by a variety of means. For instance, a chromed plastic strip can be added to the lower part of the bumper's face or the bumper is molded in such a way that a lip is formed on the lower portion. This single bumper system with integrated design characteristics is specifically suitable to reduce pedestrian knee injuries.

Particularly the lip arranged at the lower portion of the bumper may consist of a bottom section forming the formost point of contact followed in the upward dircection by a sloped section tapering gradually towards the upper protion of the bumper. The partly straight approximately vertical front surface may by reduced to a tangential line on a curved surface.

Preferably, the cross sectional area (measured between the front contour of the bumper and a vertical line) of the lower portion (the lower half, below the middle-line) of the bumper is greater than the respective cross sectional area of the upper portion. Particularly, the height of the lip formed at the lower portion of the bumper is less than half of the bumpers height. In making the height of the lower portion less than half of the bumpers height, the force distribution in case of an impact is concentrated more to the lower end of the bumper which again is advantageous to reduce knee injuries.

In order to support the effect of the geometry described above a reinforcing structure is arranged on the inner surface of the cover in the range of the lower portion of the bumper. Such structure preferably consists essentially of a surface connecting the front part of the cover and the lower flange which at the bottom is bent backwardly towards the body. Such surface may extend lengthwise of the bumper but preferably the structure would consist of one or more ribs arranged approximately perpendicular to the inner surface of the bumper in its lower portion. With this reinforcing structure and by adapting the distance between adjacent ribs, the stiffness in the lengthwise direction of the bumper can be optimized. Especially at the end portions where the bumper is bent towards the fenders, the curvature intrinsically increases the stiffness of the bumper. This can be balanced by adjusting the wall thickness of the reinforcing structure and/or by adjusting the distance between adjacent ribs. Thus with the design of this invention, along the length of the bumper optimal stiffness of the bumper can be achieved which could also adjust for the structural effect of the mounting/supporting elements.

Typically, the reinforcing ribs would have an approximately triangular shape with two sides of this shape formed by the contour of the inner surface of the bumper at its lower corner.

According to the invention the foam stiffness in the lower portion of the bumper is higher than the foam stiffness in the upper portion. E.g. the top two thirds of the bumpers height could be filled with a low stiffness foam and the lower third with a high stiffness foam.

Preferably, the lower portion of the bumper is filled with a high density foam and the upper portion of the bumper is filled with a low density foam. The low density foam may extend to the lower portion of the bumper and surround the high density foam. Alternatively, the high density foam may extend up to the upper portion of the bumper and enclose the low density foam. By these designs more control over the load on the pedestrians tibia, fibula (lower leg bones) and the knee joint can be achieved. If the lower leg is considered to be a beam, then the manner in which this beam is loaded can be controlled by the distribution of stiffness across the bumper face. This in turn can be controlled by the foam density and in the way, the density is varied throughout the foam absorber. Therefore, in a preferred embodiment, the foam density is varying from top to bottom and from front to depth of the bumper in its mounted position.

Additionally or alternatively to varying the foam density itself voids may be distributed in the foam. Whereas the density of the foam may be controlled by the material of the foam and its porosity, the additional inclusion of voids would allow to further optimize the foam stiffness without the restrictions with respect of the material and the porosity which may depend on the production process.

To further improve the distribution of the bumpers stiffness along its length a reinfocing structure like a beam can be arranged between the cover and/or foam and the mounting elements.

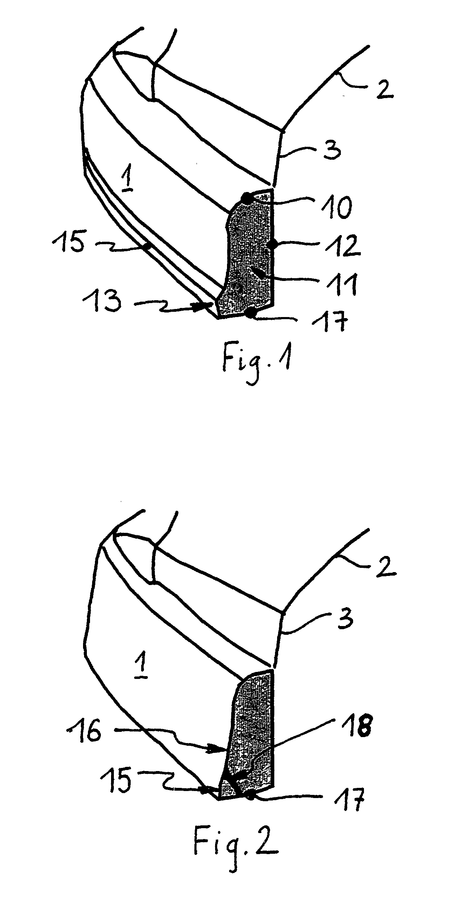

With respect to the schematic representations given in figures 1 to 4, further explanations on the invention and the various embodiments are given. The constructions according to Fig. 1 and 2 are not part of the invention. In Fig. 1, the bumper 1 is attached to the front of the vehicle of which the bonnet 2 and the front grille 3 are schematically shown. The bumper 1 consists of a cover 10 with an opening 11 and optionally a supporting structure 12 which can be a beam extending at least party into the longitudinal direction of the bumper 1. Either directly to the cover 10 or the supporting structure 12 mounting elements (not shown) serve for the mechanical connection between the bumper 1 and the body of the vehicle. In the lower portion of the bumper a lip 13 is shown which extends forwardly into direction of driving. This lip has an approximately straight vertical front surface 15, an upper flange 16 protruding backwardly and connection the front surface 15 with the part of the cover which extends towards the upper portion of the bumper. At the bottom of the cover a flange 17 is protruding backwardly towards the vehicles body.

As shown in Fig. 2, the front surface 15 of the lip 13 may be connected to the upper portion of the bumper by a tapered section 16. In the range of the lip 13, ribs 18 are connecting the interior surface of the cover directed forwardly and the interior surface of the flange 17 bent backwardly towards the vehicles body.

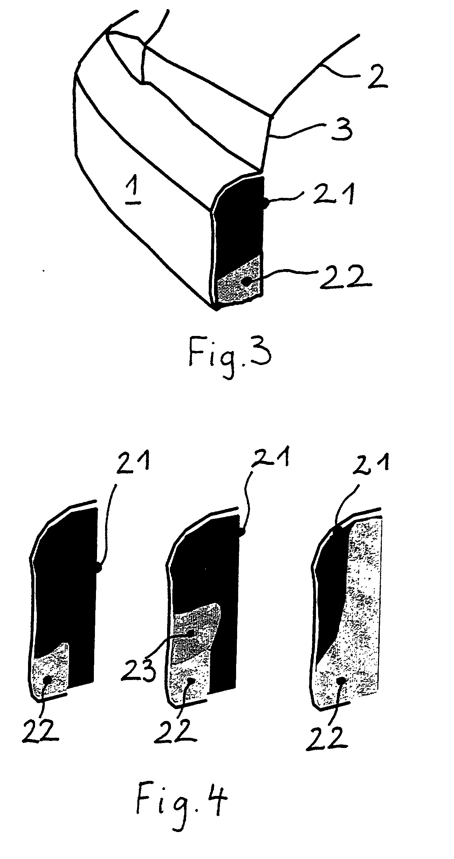

As shown in Fig. 3, the spacing 11 may filled by two different types of foam, a low stiffness or low density foam 21 and a foam 22 with increased stiffness or densitiy.

As shown in Fig. 4, the low density foam 21 may extend downwards to partly enclose the high density foam 22 or vice versa the high stiffness foam 22 may extend upwardly and behind the low stiffness foam 21. Between these foams of different stiffness 21 and 22 one or more intermediate areas may be filled with a foam 23 which has an intermediate stiffness or density. The structure of the cover as shown in Fig. 1 and 2 may advantageously combined with the structure of different foams shown in Fig. 3 and 4 to further optimize the pedestrian protection.

## Claims

1. Bumper for vehicles with optimal mechanical properties which improve the pedestrian protection and which essentially consists of a cover (10) and a mounting or supporting element to connect the cover to the vehicle body,
a spacing between the cover (10) and the mounting element filled with absorber foam,
the foam in the lower portion of the bumper having an increased stiffness,
so that
the vertically lower portion of the bumper (1) prior to a collision and in its mounted position has an increased stiffness relative to the upper portion of the bumper, and
the relatively stiff lower portion being an integral part of the bumper
**characterized in that**
the spacing is completely filled with foam and
the relatively stiff lower portion is extending forwardly into the direction of driving relative to the upper portion.

2. Bumper according to claim 1,
**characterized in that**
the foam (22)in the lower portion of the bumper has an increased density.

3. Bumper according to claim 1 or 2,
**characterized in that**
the foam (21, 22) density is varying from top to bottom and front to depth of the bumpers in its mounted position.

4. Bumper according to one of the claim 1-3,
**characterized in that**
voids are distributed in the foam (21, 22, 23).

## Patentansprüche

1. Fahrzeugstoßfänger mit optimalen mechanischen Eigenschaften zur Verbesserung des Fußgängerschutzes, wobei der Stoßfänger im Wesentlichen aus einer Abdeckung (10) und einem Montage- oder Stützelement zur Verbindung der Abdeckung mit der Fahrzeugkarosserie besteht, wobei ein Abstand zwischen der Abdeckung (10) und dem Montageelement mit Absorberschaum gefüllt ist, der im unteren Teil des Stoßfängers vermehrte Steifigkeit aufweist, sodass der vertikal untere Teil des Stoßfängers (1) vor einem Zusammenprall und in seiner montierten Position im Vergleich zum oberen Teil des Stoßfängers vermehrte Steifigkeit aufweist, wobei der relativ steife untere Teil ein integraler Bestandteil des Stoßfängers ist, **dadurch gekennzeichnet, dass** der Abstand vollständig mit Schaum gefüllt ist und der relativ steife untere Teil sich in Bezug auf den oberen Teil nach vorne in Fahrtrichtung erstreckt.

2. Stoßfänger nach Anspruch 1, **dadurch gekennzeichnet, dass** der Schaum (22) im unteren Teil des Stoßfängers erhöhte Dichte aufweist.

3. Stoßfänger nach Anspruch 1 oder 2, **dadurch gekennzeichnet, dass** der Schaum (21, 22) in dem Stoßfänger, wenn dieser montiert ist, von oben nach unten und von vorne nach hinten unterschiedliche Dichte aufweist.

4. Stoßfänger nach einem der Ansprüche 1 - 3, **dadurch gekennzeichnet, dass** in dem Schaum (21, 22, 23) Hohlräume verteilt sind.

## Revendications

1. Pare-chocs pour véhicules ayant des propriétés mécaniques optimales améliorant la protection des piétons, et se composant essentiellement d'un recouvrement (10) et d'un élément de fixation ou de support servant à connecter le recouvrement au châssis du véhicule, d'un espacement entre le recouvrement (10) et l'élément de fixation rempli d'une mousse absorbante, la mousse dans la portion inférieure du pare-chocs ayant une rigidité accrue, de sorte que la portion verticalement inférieure du pare-chocs (1) avant une collision et dans sa position fixée ait une rigidité accrue par rapport à la portion supérieure du pare-chocs, et la portion inférieure relativement rigide faisant partie intégrante du pare-chocs,
**caractérisé en ce que** l'espacement est complètement rempli de mousse et la portion inférieure relativement rigide s'étend vers l'avant dans la direction d'avance par rapport à la portion supérieure.

2. Pare-chocs selon la revendication 1, **caractérisé en ce que** la mousse (22) dans la portion inférieure du pare-chocs a une densité accrue.

3. Pare-chocs selon la revendication 1 ou 2, **caractérisé en ce que** la densité de la mousse (21, 22) varie de haut en bas et d'avant en arrière des pare-chocs dans sa position fixée.

4. Pare-chocs selon l'une quelconque des revendications 1 à 3, **caractérisé en ce que** des vides sont répartis dans la mousse (21, 22, 23).
